# EUROPEAN PATENT APPLICATION

(11) **EP 1 130 860 A2**
(43) Date of publication of application: **05.09.2001**
(21) Application number: 01301693.6
(22) Date of filing: 23.02.2001
(51) Int. Cl.: H04L 12/64

(54) **Information processing apparatus and method and medium**

(30) Priority: 29.02.2000 JP 2000055052
(71) Applicant: SONY CORPORATION, Tokyo 141 (JP)
(72) Inventor: Sato, Naoyuki, c/o Intell. Property Department, Shinagawa-ku, Tokyo 141 (JP); Kageyama, Yuichi, c/o Intell. Property Department, Shinagawa-ku, Tokyo 141 (JP)
(74) Representative: Pilch, Adam John Michael

(57) **Abstract**

To prevent a reservation made from one (e.g. 1) to any other one (e.g. 2, 3 or 4) of the units from being unconditionally accepted or rejected and arbitrate between the units for the reservation in a serial communication network organized using the IEEE 1394 serial data bus (8) for example, reservation information (reserve command) including a reservation priority is generated and transmitted for reservation of use of a part or all (for example, REC, PB, etc. of DVCR) of any other unit connected to the one unit via the network.

## Description

The present invention relates to an information processing apparatus suitable for connection to a network composed of the IEEE 1394 serial data bus for example, an information processing method to be effected in the information processing apparatus, and a medium having recorded therein a program to be executed by the information processing apparatus.

There have recently been developed various types of audio visual (AV) apparatuses adapted for connection to a network organized using the IEEE 1394 serial data bus, for example, prescribed by the Institute of Electrical and Electronics Engineers (IEEE) and for mutual information communications between such AV apparatuses via the network. In this network system, AV apparatuses connected to the network can control each other using a predetermined digital interface command (AV/C command transaction set: will be referred to as "AV/C command" hereafter).

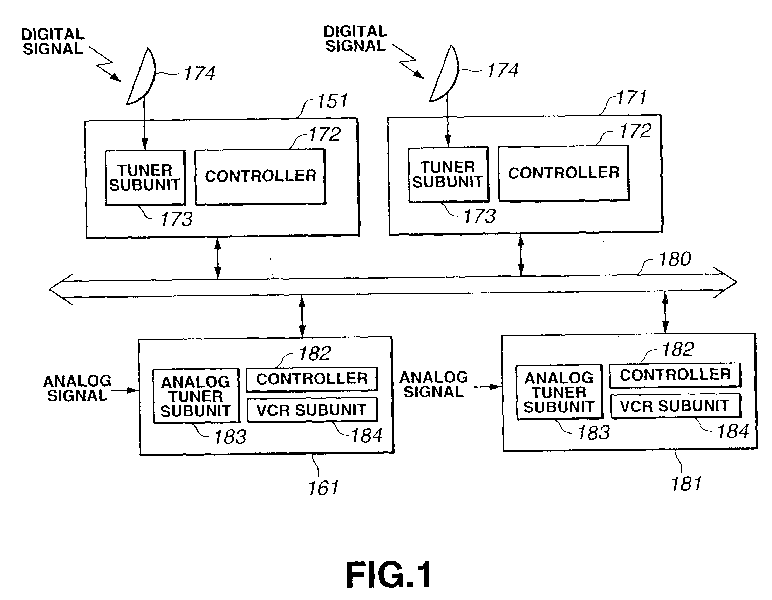

Referring now to FIG. 1, a conventional network system is schematically illustrated in the form of a block diagram. In this example of network system shown in FIG. 1, an IEEE 1394 serial data bus 180 (will be referred to simply as "bus 180" hereafter) can be used to record a video signal, received, for example, by digital-satellite receiving integrated receiver decoders (IRD) 151 and 171, by digital video cassette recorders (DVCR) 161 and 181 connected to the IRDs via the bus 180. Of course, the DVCRs 161 and 181 has playback, fast forward, rewind, pause and frame advance functions in addition to the recording function. Also the IRDs 151 and 171, and DVCRs 161 and 181, can be used for reserved recording. Note that the IRDs 151 and 171 are identical in construction to each other and also DVCRs 161 and 181 are also identical in construction to each other.

In the conventional network shown in FIG. 1, a controller 172 is provided in each of the IRDs 151 and 171 to control the IRDs 151 and 171 themselves as well as the DVCRs 161 and 181.

In the conventional network shown in FIG. 1, when a reserved recording is to be done between the IRD 171 and DVCR 181, the controller 172 provided in the IRD 171 is used to control the IRD 171 itself and DVCR 181. Namely, the reserved recording is set (as to channel, start time, etc.) with respect to the IRD 171. When the set start time is reached, the controller 172 will internally control a digital tuner subunit 173 provided in the IRD 171 to select the set (reserved) channel, and provides, to the DVCR 181 via the bus 180, a video signal etc. received by the digital tuner subunit 173 from signals captured by a communication satellite (CS) antenna 174. At the same time, the controller 172 will transmit a recording start command, via the bus 180, to a video cassette recorder (VCR) subunit 184 provided in the DVCR 181. Then, the VCR subunit 184 responds to the recording start command transmitted from the controller 172 to record, to a recording medium such as a magnetic tape (not shown), the video signal transmitted from the digital tuner subunit 173. Thus, in the network shown in FIG. 1, the reserved recording is effected between the IRD 171 and DVCR 181.

Note that also for a reserved recording to be done between the IRD 151 and DVCR 161 for example, the same operations are effected as in the above.

Further, each of the DVCRs 161 and 181 is also provided with a controller 182 to provide a control over recording by the VCR subunit 184 of a video signal received by an incorporated analog tuner subunit 183, for example.

Note that electronic devices such as the IRDs 151 and 171, and DVCRs 161 and 181, connected to the bus 180, are called "unit''. There is used among the units a description (will be referred to as "Descriptor" hereafter wherever it is appropriate) prescribed in the AV/C Digital Interface Command Set General Specification (will be referred to as "AV/C General" hereafter) of the AV/C command (AV/C Command Transaction Set as in the above) in order to enable each of the units to read and write information stored therein. The detail of the AV/C General is on public view at the Internet home page "http://www.1394a.org/" and so will not be described any further. Also, a function each unit has is called "subunit". For example, the subunits include the digital tuner subunits 173 of the IRDs 151 and 171, respectively, and the VCR subunits 184 of the DVCRs 161 and 181, respectively, in FIG. 1.

In the network system using the aforementioned IEEE 1394 serial data bus and to which a plurality of units is connected, when a certain one of the units (the unit will be designated as "unit a" for example herein) reserves a selected one d of functions of other certain one of the units (this unit will be designated as "unit b" for example herein), the unit a transmits reserve information to the unit b as a rule. When the unit b receives the reserve information from the unit a, the function d designated with the reserve information will be reserved in the unit b.

However, if reserve information for the function d is transmitted from any other unit c to the unit b while the certain function d of the unit b has been reserved by the unit a for example, the function d of the unit b will be reserved by the unit c although the function d has already been reserved by the unit a (in other words, the unit a will be deprived, by the unit c, of the reservation of the function d) or the unit b will be disabled to judge for which of the units it should accept the function reservation, a or c.

In this event, such a rule may be considered that only a first reservation should be accepted for example. However, this will lead to a setting that any second and subsequent reservations will always be rejected unconditionally. On the other hand, there can be a case, for example, that when the function d of the unit b has been reserved by the unit a while the function e of the unit b has been reserved by the unit c, the function e for example is more important than the function d. More specifically, assume for example that an IRD has first made a reservation to a DVCR for playback and after that any other IRD makes a reservation to the same DVCR for recording.

Generally, the recording is considered to be more important than the playback. However, if it has been set as in the above that only the first reservation should be accepted, information having to be recorded cannot be recorded.

Accordingly, an aim of at least an embodiment of the present invention is to overcome the above-mentioned drawbacks of the prior art by providing an information processing apparatus, method and medium, capable of preventing a reservation from being unconditionally accepted or rejected when a certain one of a plurality of units connected to each other in a network system using for example the IEEE 1394 serial data bus reserves a function of any other unit and arbitrating between the units for reservation priority.

One aspect of the invention provides an information processing apparatus for connection to a network to which a plurality of units is connectable, the apparatus including means for generating reservation information including a reservation priority when one of the units connected to each other via the network makes a reservation for use of a part or all of functions of any other one of the units.

Another aspect of the invention provides an information processing apparatus for connection to a network to which a plurality of units is connectable, the apparatus including means for judging based on a reservation priority included in the reservation information, when one of the units connected to each other via the network receives information of reservation for use of a part or all of its functions from any other one of the units, whether the reservation for use of the part or all of the functions should be accepted or rejected.

A further aspect of the invention provides an information processing method for use in an information processing apparatus for connection to a network to which a plurality of units is connectable, the method including a step of generating reservation information including a reservation priority when one of the units connected to each other via the network makes a reservation for use of a part or all of functions of any other one of the units.

Yet another aspect of the invention provides an information processing method for use in an information processing apparatus for connection to a network to which a plurality of units is connectable, the method including a step of judging based on a reservation priority included in the reservation information, when one of the units connected to each other via the network receives information of reservation for use of a part or all of its functions from any other one of the units, whether the reservation for use of the part or all of the functions should be accepted or rejected.

A still further aspect of the invention provides a medium having recorded therein a program to be executed by an information processing apparatus connected to a network to which a plurality of units is connectable, or the program itself, the program including a step of generating reservation information including a reservation priority when one of the units connected to each other via the network makes a reservation for use of a part or all of functions of any other one of the units.

Another further aspect of the invention provides a medium having recorded therein a program to be executed by an information processing apparatus for connection to a network to which a plurality of units is connectable, or the program itself, the program including a step of judging based on a reservation priority included in the reservation information, when one of the units connected to each other via the network receives information of reservation for use of a part or all of its functions from any other one of the units, whether the reservation for use of the part or all of the functions should be accepted or rejected.

With the above information processing apparatus, method and medium embodying the present invention, reservation information including a reservation priority is generated when one of the units connected to each other via a network makes a reservation for use of a part or all of functions of any other one of the units, whereby in a serial communication such as a one using the IEEE 1394 serial data bus, it is possible to prevent a reservation made from one to any other one of the units from being unconditionally accepted or rejected and arbitrate between the units for the reservation.

With the above information processing apparatus, method and medium embodying the present invention, when one of the units connected to each other via the network receives information of reservation for use of a part or all of its functions from any other one of the units, it is judged based on a reservation priority included in the reservation information whether the reservation for use of the part or all of the functions should be accepted or rejected, whereby in a serial communication such as a one using the IEEE 1394 serial data bus, it is possible to prevent a reservation made from one to any other one of the units from being unconditionally accepted or rejected and arbitrate between the units for the reservation.

The invention will now be described by way of example with reference to the accompanying drawings, throughout which like parts are referred to by like references, and in which:
FIG. 1 is a schematic block diagram of a conventional network system;
FIG. 2 is a schematic block diagram of the network system according to an embodiment of the present invention;
FIG. 3 is a block diagram of the integrated receiver decoder (IRD), showing the IRD construction in detail;
FIG. 4 is a block diagram of the digital video cassette recorder (DVCR), showing the DVCR construction in detail;
FIG. 5 shows the relation between the reserve command and priority;
FIG. 6 explains an example of the flow of operations in a reservation arbitration based on a priority imparted to a reserve command;
FIG. 7 explains another example of the flow of operations in a reservation arbitration based on a priority imparted to a reserve command;
FIG. 8 explains the flow of operations in reservation arbitrations shown in FIGS. 6 and 7;
FIG. 9 is a flow chart of operations effected in a reservation of a target's function at the controller side;
FIG. 10 explains the format of the function control protocol (FCP) frame;
FIG. 11 explains the format of the AV/C command frame;
FIG. 12 explains the format of the AV/C response frame;
FIG. 13 explains the command types;
FIG. 14 explains the subunit types;
FIG. 15 explains the subunit IDs;
FIG. 16 explains the format of the reserve control command;
FIG. 17 explains the stored priority;
FIG. 18 explains the format of the reserve status command;
FIG. 19 explains the response codes;
FIG.20 explains the quick transaction of AV/C;
FIG. 21 explains the delayed transaction of AV/C; and
FIG. 22 is a block diagram of a general-purpose personal computer.

It should be noted that the term "system" used herein means a collection of a plurality of units, means, etc.

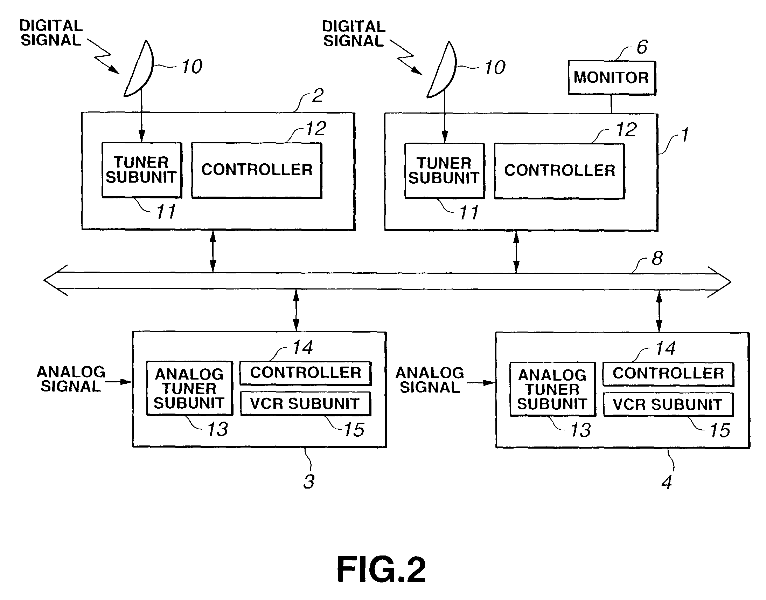

Referring now to FIG. 2, the network system according to the present invention is schematically illustrated in the form of a block diagram.

The network system shown in FIG. 2 includes an IEEE 1394 serial data bus (will be referred to as "bus" hereafter) 8, IRDs 1 and 2, and DVCRs (recorders such as D-VHS or the like) 3 and 4. Of course, in addition to the IRDs and DVCRs, there can be connected to the bus 8 electronic devices each with an IEEE 1394 terminal such as a personal computer, hard disc drive, CD player, monitor, digital video camera, MD (trade mark) player, etc. Note that the IRDs 1 and 2 are identical in construction to each other and the DVCRs 3 and 4 are also identical in constructed to each other.

Each of the IRDs 1 and 2 has a controller 12. Accepting an instruction for performance of any of various functions such as channel selection, recording reservation, etc. from the user, the controllers 12 control the IRDs 1 and 2, respectively, as a whole. The controls 12 can control the DVCRs 3 and 4, respectively, using the AV/C command as a predetermined digital interface command. There are further provided CS antennas 10 which receive a digital signal transmitted from a digital satellite broadcasting station via a communications satellite (not shown) and deliver it to a tuner subunit 11 provided in each of the IRDs 1 and 2. Under the control of the controller 12, the tuner subunit 11 extracts a signal on a desired channel from the digital signal supplied from the CS antenna 10, and provides it to a VCR subunit 15 in each of the DVCRs 3 and 4 via the bus 8.

The DVCRs 3 and 4 include controllers 14, respectively. Accepting an instruction for performance of any of various functions such as playback, recording, fast forward, rewind, recording reservation, etc. from the user, the controllers 14 control the DVCRs 3 and 4, respectively, as a whole. Under the control of the controller 14, an analog tuner subunit 13 provided in each of the DVCRs 3 and 4 extracts a signal on a predetermined channel from an input analog signal, and provides it to the VCR subunit 15.

The VCR subunit 15 is provided to record a video signal supplied from the analog tuner subunit 13 or a video signal supplied from the tuber subunit 11 in each of the IRDs 1 and 2 via the bus 8 to a magnetic tape (not shown).

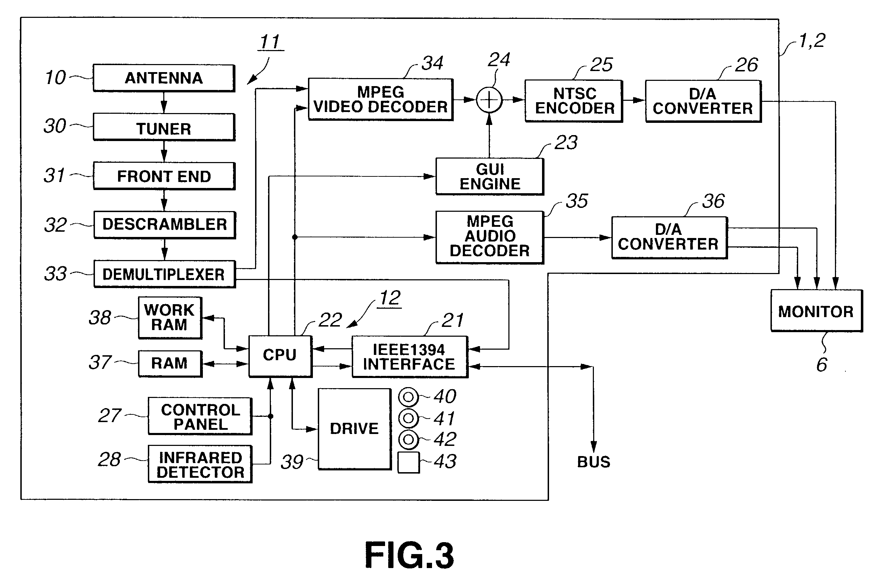

Referring now to FIG. 3, the construction of the IRDs 1 and 2 shown in FIG. 2 is illustrated in detail.

As shown in FIG. 3, a global unique identifier (GUID) or EUI-64 transmitted from the DVCRs 3 and 4 or other unit (not shown) via the bus 8 or a signal for designation of function control is supplied to a central processing unit (CPU) 22 being the core of the controller 12 via an IEEE 1394 interface 21. The CPU 22 generates from the supplied GUID or function control designating signal a control signal destined for generation of video data representing a menu screen and a graphic user interface (GUI) data, and provides it to a GUI engine 23. The GUI engine 23 provides the generated GUI data via an adder 23 to a National TV Standard Committee (NTSC) encoder 25 where it will be converted to an NTSC data. The NTSC data is provided to a digital/analog (D/A) converter 26 where it will be converted to an analog signal. Thus, a menu screen appears on a monitor 6.

Operating a control panel 27 or a remote commander (not shown), the user selects any desired one of the DVCRs 3 and 4 etc. connected to the bus 8, and designates a process (function) to be performed by the selected unit. When the user operates the remote commander, an infrared detector 28 is supplied from the remote commander with an infrared signal indicating when the remote commander was operated by the user. The CPU 22 will generate a control signal from the signal representing the user's operation to the remote commander, supplied from the control panel 27 or infrared detector 28, and provides it to the GUI engine 23, MPEG video decoder 34 and MPEG audio decoder 35 and to the DVCRs 3 and 4, etc. via the IEEE 1394 interface 21 and bus 8. The CPU 22 displays a broadcast wave received by the antenna 10 on the monitor 6 and supplies it to the DVCRs 3 and 4 via the IEEE 1394 interface 21 and bus 8.

The antenna 10 receives a broadcast wave from a communications satellite (not shown), and provides i to a tuner 30 provided in the tuner subunit 11. The tuner 30 will select a desired channel from the received broadcast wave according to the control signal supplied from the CPU 22. A reception signal corresponding to the broadcast signal on the selected channel is demodulated and subjected to error correction in a front end unit 31, and provided to a descrambler 32. According to encryption key information for a subscribed channel recorded in an IC card (not shown) inserted in the IRD body, the descrambler 32 selects, from the input data, multiplexed data on only the subscribed channel, and provides it to a demultiplexer 33. Then the demultiplexer 33 will rearrange the input multiplexed data by each channel, extract data on only the user-defined channel based on an input from the CPU 22, provide a video stream of video packets in the extracted data to the MPEG video decoder 34, and provide an audio stream audio packets to the MPEG audio decoder 35.

The MPEG video decoder 34 decodes the video stream to restore a video data before compressed, and provides the restored video data to the NTSC encoder 25. The NTSC encoder 25 converts the video data to NTSC brightness signal and color-difference signal, and provides them as NTSC data to the digital/analog (D/A) converter 26. The D/A converter 26 converts the NTSC data to an analog signal. The analog signal is sent to the monitor 6 on which an image will thus be displayed.

The MPEG audio decoder 35 decodes the audio stream to restore a pulse code modulation (PCM) audio data before compressed, and provides the restored audio data to a D/A converter 36. Converting the PCM audio data to an analog signal, the D/A converter 36 generates an R-channel audio signal and L-channel one. These audio signals are sent to speakers (not shown) installed on the monitor 6.

A RAM 37 is also provided to save a program which is to be executed by the CPU 22. The program and data are read by the CPU 22 when necessary. The RAM 37 has provided therein a register to hold descriptors conforming to the AV/C General. Also a work RAM 38 is provided to save data etc. generated as the program is executed by the CPU 22.

Further a drive 39 is connected to the CPU 22. The drive 39 is adapted to be compatible with a magnetic disc 40, optical disk 41, magneto-optical disc 42 or a semiconductor memory 43. The CPU 22 can read data stored in these magnetic disc 40 to semiconductor memory 43.

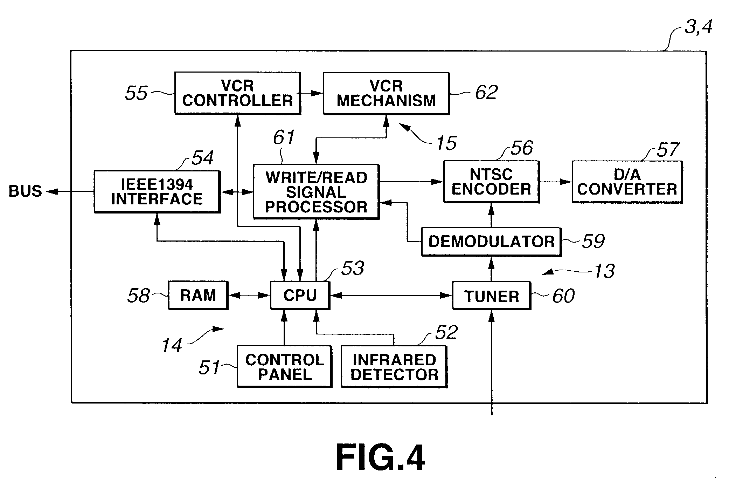

Referring now to FIG. 4, the construction of the DVCRs 3 and 4 are illustrated in detail.

As will be seen from FIG. 4, when the user operates a control panel 51 or a remote commander (not shown), a CPU 53 will be supplied with a signal corresponding to the operation made by the user at the control panel 51 from the control panel 51 or an infrared detector 52 (when the user operates the remote commander, the infrared detector 52 will be supplied from the remote commander with an infrared signal indicating that the user operated the remote commander and provides it to a CPU 53). The CPU 53 will be supplied with a control signal, via the bus 8 and IEEE 1394 interface 54, from any other unit also connected to the bus 8.

Based on these signals, the CPU 53 is the core of the controller 14 will generate a control signal to control a VCR controller 55 of the VCR subunit 15, and provide it to the VCR controller 55. Also, the CPU 53 sends to a write/read signal processor 61 video data supplied from any other unit via the bus 8 and IEEE 1394 interface 54 and controls a VCR mechanism 62 by means of the VCR controller 55, thereby recording a write signal generated from the video data by the write/read signal processor 61 to a video cassette tape (not shown) loaded in the VCR mechanism 62, or playing back a write signal recorded in the video cassette tape and sending it to the write/read signal processor 61 for restoration of the video data. The restored video data is sent to an NTSC encoder 56 where it will be converted to NTSC data, the NTSC data is further converted in a D/A converter 57 to an analog signal. Thereafter, the analog signal will be provided to a display unit such as a monitor (not shown) for display, or sent to other unit also connected to the network via the IEEE 1394 interface 54 and bus 8.

Furthermore, the CPU 53 can read a program and data saved in a RAM 58 and save data into the RAM 58 as necessary. The RAM 58 has provided therein a register in which descriptors conforming to the AV/C General are saved. Moreover, the RAM 58 saves a program to be executed by the CPU 53 and data etc. generated as the CPU 53 works.

When a video cassette tape (not shown) is loaded in the VCR mechanism 62, the VCR controller 55 provides the CPU 53 with a signal indicating when the video cassette tape was loaded. Supplied with that signal, the CPU 53 will control the control panel 51 to display a symbol or character indicating when it received the signal or illuminate an LED provided for the purpose, thereby allowing the user to recognize that the video cassette tape has been loaded in the DVCR.

A tuner 60 is also provided to select, according to a control signal supplied from the CPU 53, a desired channel from a ground broadcast wave received by an antenna (not shown). A reception signal corresponding the broadcast wave on the selected channel is demodulated by a demodulator 59, and sent to the write/read signal processor 61 or NTSC encoder 56. The reception signal sent to the write/read signal processor 61 is converted to a record signal under the control of the CPU 53, and recorded to a video cassette tape (not shown) in the VCR mechanism 62 controlled by the VCR controller 55. Also, the reception signal sent to the NTSC encoder 56 is converted by the NTSC encoder 56 to NTSC data. The NTSC data thus obtained is further converted by the D/A converter 57 to an analog signal, and then provided to the display unit such as a monitor (not shown) for display or sent to any other unit also connected to the network via the IEEE 1394 interface 54 and bus 8.

In the network system according to the present invention, including a plurality of units such as the IRDs 1 and 2, and DVCRs 3 and 4 connected to the network system organized using the aforementioned IEEE 1394 serial data bus, when a certain one of the units (for example, IRD controller) reserves a selected one of the functions of any other one of them (for example, a function such as recording or playback at a DVCR), it is possible by defining the priority of reservation information as will be described later to arbitrate between a plurality of units for reservation and prevent a reservation from being unconditionally accepted or rejected.

Namely, in the network system organized using the IEEE 1394 serial data bus according to the present invention and to which a plurality of units is connected, for a certain one of the units to reserve a selected one of functions of any other certain unit, priorities for acceptance/rejection of deprivation of the reservation to the units other than the certain units are defined to assign priorities to reservation information for arbitration between the plurality of units for reservation.

In this embodiment, the priority of the reservation information is defined based on the RESERVE command priority specified in the AV/C General. Note that how the priority of the RESERVE command should be used is not specially specified at present although the RESERVE command specified in the AV/C General will be described in detail later.

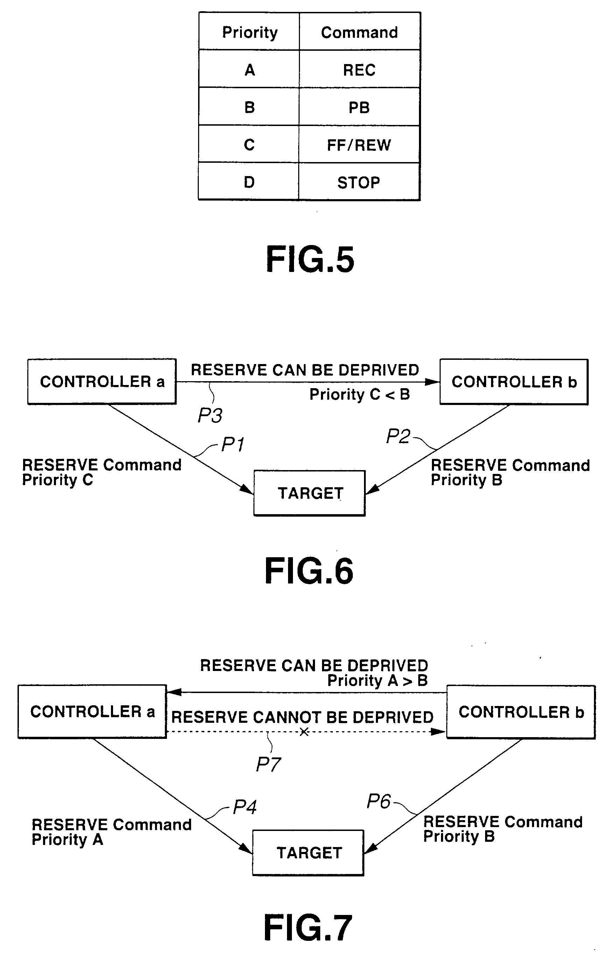

Referring now to FIG. 5, there is shown an example of the relation between the reserve command and priority for reservation of a function of a DVCR for example, in which a priority is defined for reservation information.

In the example shown in FIG. 5, a highest priority A is assigned to a reserve command for reservation of recording (REC), for example, of the functions of the DVCR is reserved, a next highest priority B is assigned to a reserve command for reservation of playback (PB) for example, a priority C lower than the priority B is assigned to a reserve command for reservation of fast forward/rewind (FF/REW) for example, and a lowest priority D is assigned to a reserve command for reservation of stop (STOP) for example.

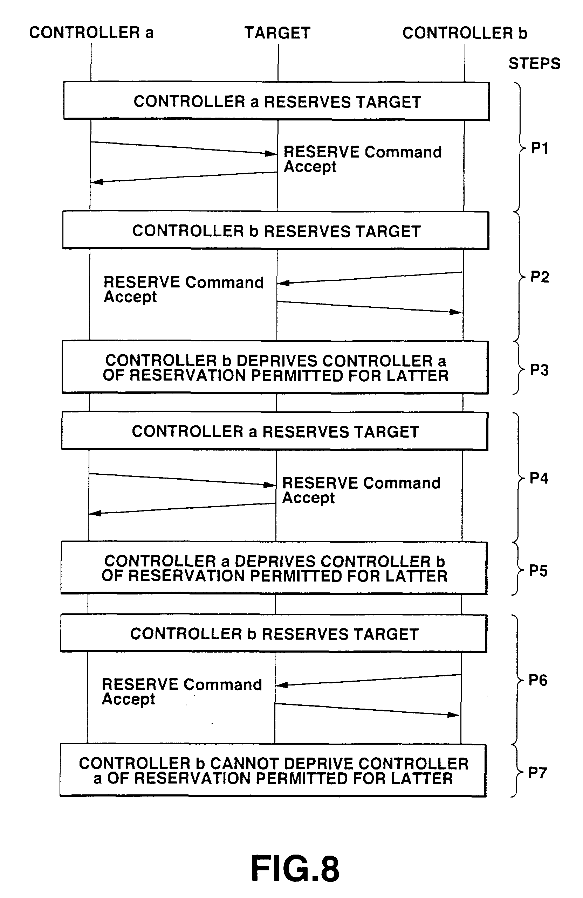

Taking in consideration the relation between the reserve commands and priorities as shown in FIG. 5, the flow of operations for reservation arbitrations based on the priorities assigned to the reservation information (reserve commands) will be described herebelow with reference to FIGS. 6 to 9. Note that in FIGS. 6 and 7, controllers A and B correspond to the controllers 12, respectively, of the IRDs 1 and 2 shown in FIG. 2 for example and targets correspond to the DVCRs 3 and 4, respectively in FIG. 2.

As shown in FIGS. 6 to 8, it is assumed that first in a procedure P1, a controller a has made a request to a target for reservation of a function corresponding to the reserve command to which the priority C is assigned. That is, when the example relation shown in FIG. 5 is applied here and the controller a of an IRD makes a reservation to a target DVCR for the FF/REW function of the DVCR, the controller a will transmit to the target DVCR the reserve command to which the priority C is assigned. Since no reservation has yet been made to the target DVCR from any other units at this time, the target will return, to the controller a, acceptance of the reservation made from the controller a.

Next in a procedure P2, it is assumed that the controller b has made a request to the target for reservation of the function corresponding to the reserve command to which the priority B is assigned. Since the priority B of the reserve command from the controller b is higher than the priority C of the reserve command from the controller a, the target will return, to the controller b, acceptance of the reservation made from the controller b. That is, when the example relation shown in FIG. 5 is applied here and the controller b of the IRD makes a reservation to the target DVCR for the PB function of the DVCR, the controller b will transmit to the target DVCR the reserve command to which the priority B is assigned. Since the priority B of the reserve command, with which the controller b has made to the target for the reservation of the PB function, is higher than the priority C of the reserve command, with which the controller a has made to the same target for the reservation of the FF/REW function, the target DVCR will return, to the controller b, acceptance of the reservation made from the controller b. Thus, as in a procedure P3, the reservation once accepted by the target will be passed from the controller a to the controller b (namely, the controller a will be deprived by the controller b of the reservation once accepted by the target).

Next in a procedure P4, it is assumed that the controller a has made a request to the target for reservation of the function corresponding to the reserve command to which the priority A is assigned. Since the priority A of the reserve command from the controller a is higher than the priority B of the reserve command from the controller b, the target will return, to the controller a, acceptance of the reservation made from the controller a. Namely, when the example relation shown in FIG. 5 is applied and the controller a of the IRD makes a reservation to the target DVCR for the REC function of the DVCR, the controller a will transmit a reserve command having the priority A assigned thereto. At this time, since the priority A of the reserve command, with which the controller a has made the reservation for the REC function of the target, is higher than the priority B of the reserve command, with which the controller b has made to the same target for the reservation of the PB function, the target DVCR will return, to the controller a, acceptance of the reservation made from the controller a. Thus, as in a procedure P5, the reservation once accepted by the target will be passed from the controller b to the controller a (namely, the controller a will deprive the controller b of its reservation once accepted by the target).

Next in a procedure P6, it is assumed that the controller b has made a request to the target for reservation of the function corresponding to the reserve command to which the priority B is assigned. In this case, however, since the priority A of the reserve command from the controller a is higher than the priority B of the reserve command from the controller b, the target will return, to the controller b, rejection of the reservation made from the controller b. That is, when the example relation shown in FIG. 5 for example is applied, since the priority A of the reserve command with which the controller a being the IRD makes a reservation of the REC function of the target is higher than the priority B of the reserve command with which the controller b makes a reservation of the PB function of the target, the target will return, to the controller b, rejection of the reservation made from the controller b. Thus, as in a procedure P7, the reservation once accepted by the target will not pass from the controller a to the controller b (namely, the controller b will not be able to deprive the controller a of the reservation accepted by the target).

In the foregoing, the flow of operations for the reservation arbitrations based on the priorities assigned to the reservation information (reserve commands) in the embodiment of the present invention has been described.

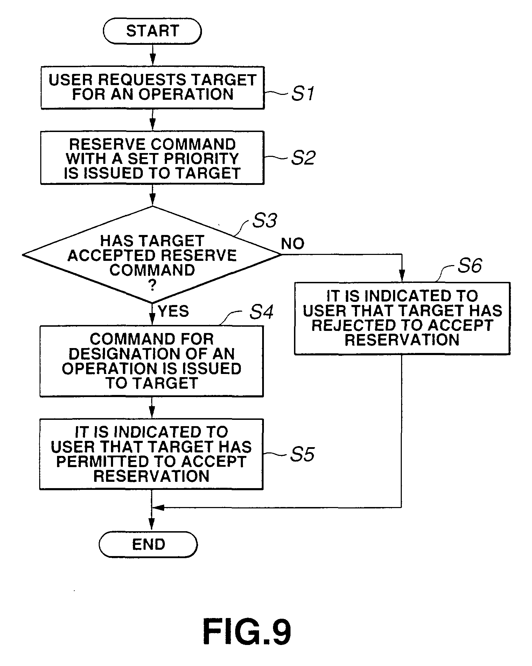

FIG. 9 shows the flow of operations effected in a reservation of a target's function at the controllers a and b as in FIGS. 6 and 7 (in the IRDs 1 and 2 in FIG. 2).

When the controller is supplied from the user with a designation of an operation to be done by the target (a function reservation is designated) at step S1, it will issue at step S2 to the target a reserve command to which a priority as set in FIG. 5 is assigned according to the content of the function reservation.

Next at step S3, the controller receives a response from the target and judges whether the target has accepted the reserve command. If the target determines at step S3 that the target has accepted the reserve command (namely, it has permitted the reservation), the controller goes to step S4. On the contrary, if the target determines that the target has not accepted the reserve command (namely, it has rejected the reservation), the controller will go to step S6.

At step S4, the controller will issue to the target a designation command for an operation designated by the user. Thereafter, at step S5, the controller notifies the user that the target has permitted to accept the reservation, by an indication or the like.

At step S6, the controller notifies the user that the target has rejected to accept the reservation, by an indication or the like.

As having been described in the foregoing, in case a plurality of units and subunits is connected to a network system organized using the IEEE 1394 serial data bus according to this embodiment and a controller of one of the units reserves a function of any other one of the units or subunits, a priority is assigned to a reserve command fro the reservation, thereby permitting to arbitrate between the plurality of units or subunits for reservation of the function in consideration.

It should be noted that although in the aforementioned embodiment, priorities are assigned to reserve commands correspondingly to the content of the control over the function of the target, a priority may be assigned to each of the units or controllers to arbitrate between the units or controllers for reservation based on the priority of a reserve command from each unit or subunit. More specifically, by setting a priority rule that a highest priority is assigned to a reserve command from a controller a of a certain unit while a lowest priority is assigned to a reserve command from a controller b of any other unit, it is possible to always give a priority to a reservation by the controller a over a one by the controller b.

Next, the reserve commands specified in the AV/C General will be described below.

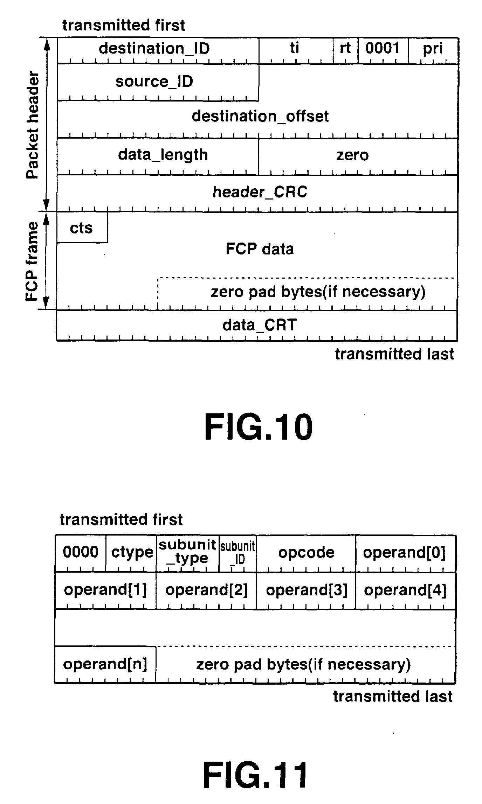

The reserve command and response corresponding to the reserve command are defined as a command and response as in the AV/C General. The command and response in the AV/C General are transmitted by the function control protocol (FCP) defined in the IEC-61883. The FCP is destined to encapsulate a command and response for control of units in the asynchronous block write transactions defined in the IEEE Standard 1394-1995. The format of the FCP is configured as shown in FIG. 10.

As shown in FIG. 10, the FCP is composed of a packet header, an FCP frame and data_CRC in this order.

The packet header has a "destination_ID" disposed at the top thereof. The "destination_ID" represents an ID of a node to which the packet is to be transferred. "tl" in FIG. 10 means a transaction label representing a unique tag appended from the node to the packet. The "rt" in FIG. 10 means a retry code related to a retry.

"tcode'' in FIG. 10 represents a transaction code whose value in this example is 0001. The value "0001" means that this block is a write request for data block.

"pri" in FIG. 10 stands for "priority" whose value is used for arbitration in a link layer.

A "source_ID" is included in the format to represent an ID of a node to which this packet is to be transmitted. "destination_offset" represents an address in the register where a command and response of the packet is to be written.

"Data_length" in FIG. 10 represents a data length in a data field. A value 0 is described in two bytes following the data_length". "header_CRC" finally included in the packet header represents a error detection code in the packet header.

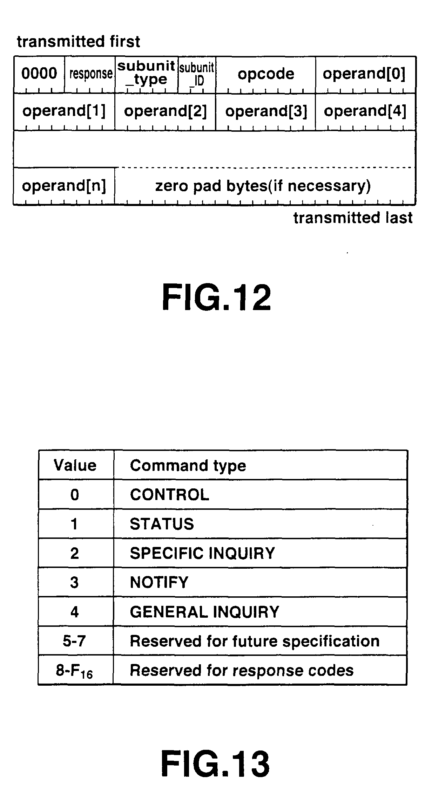

A command/transaction set (CTS) is disposed at first 4 bits in the FCP frame of the payload part. This CTS has a value of 0000 for an AV/C transaction. The CTS is followed by FCP data. The FCP data is shown in detail in FIGS. 11 and 12. FIG. 11 shows the FCP frame of an AV/C command frame, and FIG. 12 shows the FCP frame of an AV/C response frame.

"ctype" in FIG. 11 stands for command type whose specified values mean as shown in FIG. 13. As in FIG. 13, the value 0 means CONTROL and 1 means STATUS.

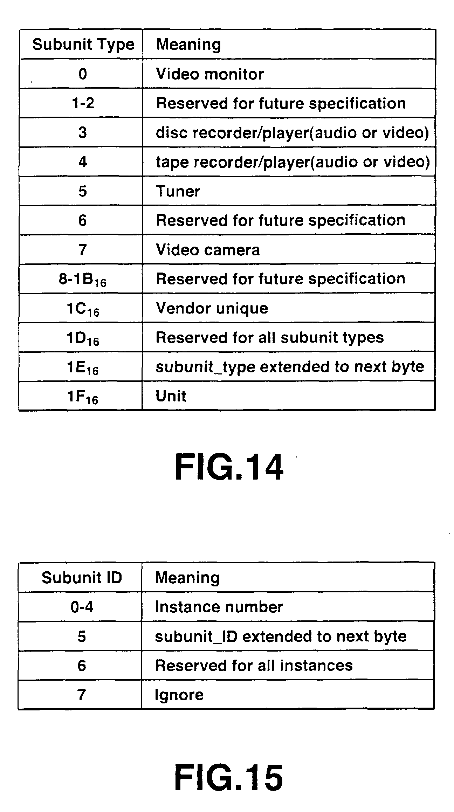

"subunit_type" in FIG. 11 represents the type of a subunit owned by the command as shown in FIG. 14. A value 0 means that the subunit is a video monitor and value 3 means that the subunit is a disc recorder or player.

"Subunit ID" in FIG. 11 is used an instance number when an extension subunit type is defined. As shown in FIG. 15, values 0 to 4 indicate instance numbers and value 5 means that the subunit ID has been extended to a next byte.

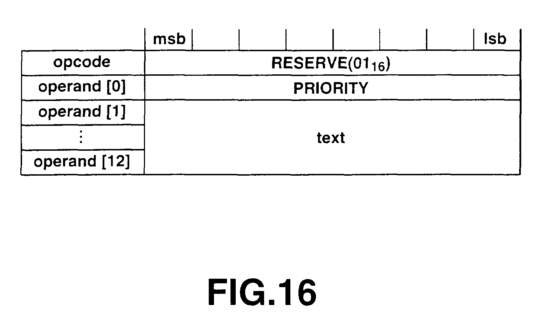

"opcode" in FIG. 11 stands for operation code. For the reservation in this embodiment, the operation code is set to have a value 01 as shown in FIG. 16. ''opcode" is followed by an operand [0] to operand [n] (n = 12 in FIG. 16). A priority is disposed at the operand [0]. This priority defines a relative priority incidental to a command as having previously been described. The value 0 means that none of the controllers have yet reserved the node. The values 1 to F means that the target has a reservation for the controller. The value 4 means a standard priority used by the controllers.

A free (not reserved) target will be reserved by a controller having issued a reserve control command. The target stores priorities with which reservations have been made, incidental text string and 16-bit node ID of the controller. Up to 12 bytes of ASCII characters are inserted in the texts following the priorities.

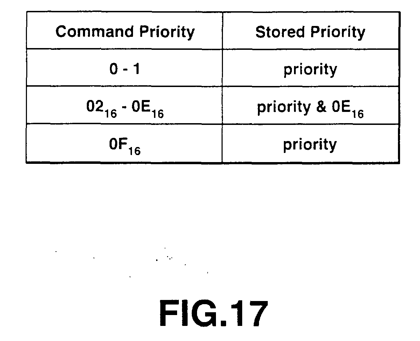

When a priority value is accepted by the target, the value to be held is converted as shown in FIG. 17. For example, values 0 and 1 will be held as priorities. Values 2 to E (hexadecimal) are held as a logical AND between a priority and E for each bit. Value F is held as a priority.

When a reservation from a predetermined controller is held, the node (target) will reject any control command other than a reserve command of control command type issued from any other controller.

When the target receives a reserve control command from the same controller holding a reservation, it will accept the command because the original controller permits to raise or lower the priority for the reservation.

When the target receives a reserve control command from any controller other than the one having made a reservation, it will reject the command unless the priority of the reservation is higher than that of the present reservation. When a new priority is higher than the present priority, a new reservation will be set up.

When a reserve control command is issued to an AV unit having a subunit holding a reservation whose priority is equal to or higher than that of the command, it will return a rejected response.

When a reserve control command is issued to an AV unit not including any subunit holding a reservation whose priority is equal to or higher than that of the command, the reservation will be established.

A control command is issued to a subunit in an AV unit reserved by a controller other than the controller having issued the control command, will be rejected.

When having detected that the bus is reset, the AV unit will reset the priority of the reservation to 0 and all the reservation node ID and reservation text to 1. And the AV unit will reject all commands of control command type except for the reserve commands until a reservation is established or until a time of 10 sec elapses. This procedure allows the original reservation holder to reestablish the reservation after the bus is reset.

None of the controllers will issue a reserve control command within a time of 10 sec since the bus is reset, unless the reservation has been established for the target before the bus is reset. Since the node ID of the AV unit is varied after the bus is reset, the controller wanting to establish a reservation will examine the node unit.

Considering the above conditions, the target estimates that a reserve command received within a time of 10 sec since the bus is reset is correct, and accepts the reservation.

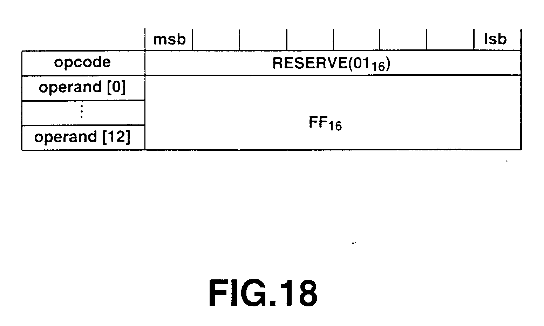

The controller can request the present reservation by issuing a reserve command having a STATUS command type field shown in FIG. 18.

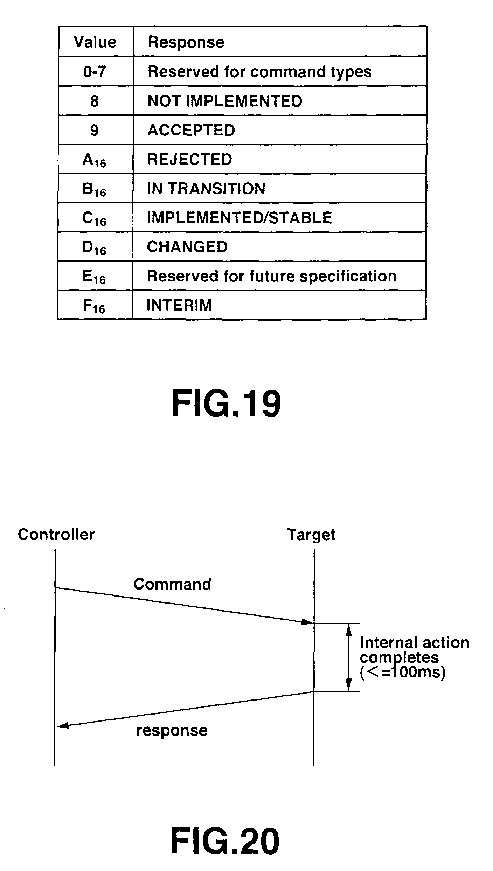

The AV/C response frame shown in FIG. 12 is similar in basic configuration to the AV/C command frame shown in FIG. 11 except that "ctype" in FIG. 11 is replaced by "response". This response represents a response code whose values 0 to F mean as shown in FIG. 19. For example, a value 8 means that the response is no implemented for the requested command, value 9 means that the requested command has been accepted, and a value A means that a corresponding command has been rejected.

As shown in FIG. 20, when the controller issues an AV/C command to the target, the target will issues a response to the command within 100 ms, if possible.

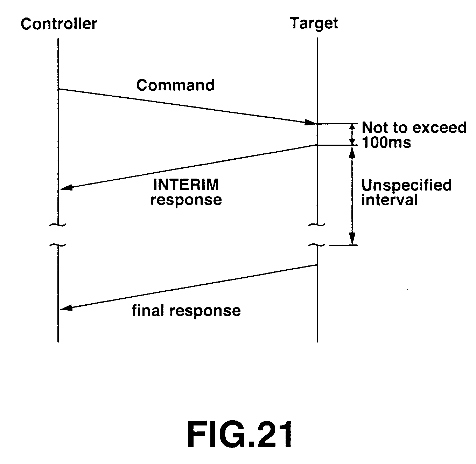

On the contrary, when a corresponding process cannot be completed within 100 ms after the command is received, an INTERIM response will be issued before the time of 100 ms elapses, as shown in FIG. 21. Thereafter, the target will issue a final response when the process is complete.

In this embodiment, the above-mentioned series of operations can be executed by a hardware as well as by a software. In case the series of operations is to be executed by a software, a program organizing the software is installed in a controller as a dedicated hardware or a general-purpose personal computer or the like having the program installed therein can perform a variety of functions.

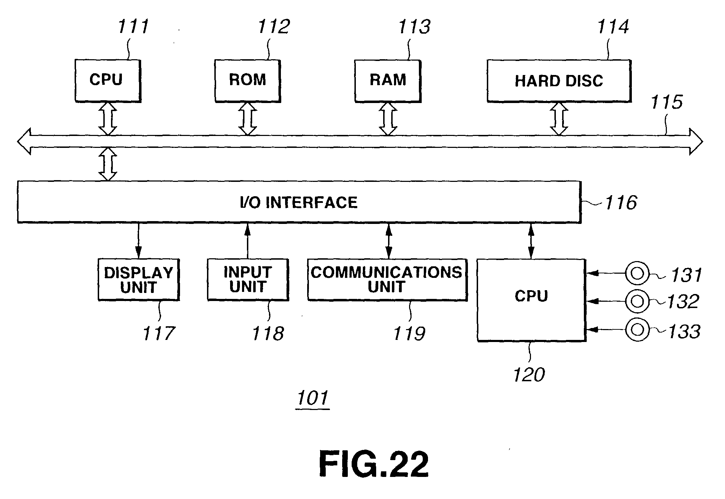

As shown in FIG. 22, there is illustrated a general-purpose personal computer in the form of a block diagram. The general-purpose personal computer is generally indicated with a reference 101. It incorporates a CPU 111. The CPU 111 has connected thereto an input/output interface 116 via a bus 115. When the CPU 111 is supplied with an instruction from an input unit 118 consisting of a keyboard, mouse, etc., operated by the user via the input/output interface 116, it will read a program for effecting the aforementioned series of operations and which is recorded in a recording medium such as a read-only memory (ROM) 112 or hard disc 114, or a recording medium such as a magnetic disc 131, optical disc 132, magneto-optical disc 133 or the like loaded in a drive 120, and write it to a random-access memory (RAM) 113 for execution. Note that the program stored in the hard disc 114 includes a one which is previously stored for distribution to the user as well as a one which is distributed from the network and received by a communications unit 119 and downloaded.

Also, the CPU 111 provides a video signal included in a result of operations effected by the program to a display unit 117 such as a liquid crystal display (LCD) or cathode-ray tube (CRT) via the input/output interface 116.

Next, a medium for installing the program for effecting the aforementioned series of operations in a computer for example and enabling the program to be executed by the computer, will be described herebelow under the assumption that the computer is a general-purpose personal computer.

The program can be served to the user in a state that it is previously installed in a hard disc or semiconductor memory as a recording medium built in the personal computer.

Alternatively, the program may be stored provisionally or permanently in a recording medium such as a floppy disc, compact disc read-only memory (CD-ROM), magneto-optical disc (MO), digital versatile disc (DVD), magnetic disc, semiconductor memory or the like for distribution as a package software.

Further, the program can be transferred wirelessly from a download site to a personal computer via a digital broadcasting satellite or by cable via a network such as a local area network, Internet or the like, and it can be stored into a hard disc or the like built in the personal computer.

The medium according to the present invention includes all the above-mentioned media.

The step of describing a program served in the medium according to the present invention includes operations effected on the time series in the written order and also operations effected in parallel or individually not on the time series.

Finally, the present invention is not limited to the embodiments having been described in the foregoing but may be modified variously without departing from the scope of the present invention.

## Claims

1. An information processing apparatus for connection to a network to which a plurality of units is connectable, the apparatus comprising:
means for generating reservation information including a reservation priority when one of the units connected to each other via the network makes a reservation for use of a part or all of functions of any other one of the units.

2. The apparatus as set forth in Claim 1, wherein the reservation priority is set for each of the functions of the other units and/or for each of the units connected to the network.

3. The apparatus as set forth in Claim 1, further comprising means for acquiring the result of the judgment of a schedule of use by the other unit from information returned from the other unit in response to the reservation information transmitted to the other unit and judging the use schedule requested of the other unit is valid or invalid.

4. The apparatus as set forth in Claim 1, wherein the network is organized using the IEEE 1394 serial data bus.

5. An information processing apparatus for connection to a network to which a plurality of units is connectable, the apparatus comprising:
means for judging based on a reservation priority included in the reservation information, when one of the units connected to each other via the network receives information of reservation for use of a part or all of its functions from any other one of the units, whether the reservation for use of the part or all of the functions should be accepted or rejected.

6. The apparatus as set forth in Claim 5, wherein the reservation priority is set for each of the functions of the other units and/or for each of the units connected to the network.

7. The apparatus as set forth in Claim 5, wherein the reservation judging means works to:
judge, for the other units, where the schedule of use is valid or invalid, based on the reservation priority included in the reservation information received from the other units connected to the reservation judging means via the network; and
return the result of judgment to the other units.

8. The apparatus as set forth in Claim 5, wherein the network is organized using the IEEE 1394 serial data bus.

9. An information processing method for use in an information processing apparatus for connection to a network to which a plurality of units is connectable, the method comprising:
a step of generating reservation information including a reservation priority when one of the units connected to each other via the network makes a reservation for use of a part or all of functions of any other one of the units.

10. The method as set forth in Claim 9, wherein the reservation priority is set for each of the functions of the other units and/or for each of the units connected to the network.

11. The method as set forth in Claim 9, further comprising means for acquiring the result of the judgment of a schedule of use by the other unit from information returned from the other unit in response to the reservation information transmitted to the other unit and judging the use schedule requested of the other unit is valid or invalid.

12. The method as set forth in Claim 9, wherein the network is organized using the IEEE 1394 serial data bus.

13. An information processing method for use in an information processing apparatus for connection to a network to which a plurality of units is connectable, the method comprising:
a step of judging based on a reservation priority included in the reservation information, when one of the units connected to each other via the network receives information of reservation for use of a part or all of its functions from any other one of the units, whether the reservation for use of the part or all of the functions should be accepted or rejected.

14. The method as set forth in Claim 13, wherein the reservation priority is set for each of the functions of the other units and/or for each of the units connected to the network.

15. The method as set forth in Claim 13, wherein the reservation judging means works to:
judge, for the other units, where the schedule of use is valid or invalid, based on the reservation priority included in the reservation information received from the other units connected to the reservation judging means via the network; and
return the result of judgment to the other units.

16. The method as set forth in Claim 13, wherein the network is organized using the IEEE 1394 serial data bus.

17. A medium having recorded therein a program to be executed by an information processing apparatus connected to a network to which a plurality of units is connectable, or the program itself, the program comprising:
a step of generating reservation information including a reservation priority when one of the units connected to each other via the network makes a reservation for use of a part or all of functions of any other one of the units.

18. A medium having recorded therein a program to be executed by an information processing apparatus for connection to a network to which a plurality of units is connectable, or the program itself, the program comprising:
a step of judging based on a reservation priority included in the reservation information, when one of the units connected to each other via the network receives information of reservation for use of a part or all of its functions from any other one of the units, whether the reservation for use of the part or all of the functions should be accepted or rejected.
